# EUROPÄISCHE PATENTANMELDUNG

(11) **EP 1 903 234 A2**
(43) Veröffentlichungstag der Anmeldung: **26.03.2008**
(21) Anmeldenummer: 07017922.1
(22) Anmeldetag: 13.09.2007
(51) Int. Cl.: F16D 13/64

(54) **Kupplungsvorrichtung**

(30) Priorität: 22.09.2006 DE 102006044940; 24.08.2007 DE 102007040023
(71) Anmelder: ZF Friedrichshafen AG, 88038 Friedrichshafen (DE)
(72) Erfinder: Buer, Gerald, 96172 Mühlhausen (DE)

(57) **Zusammenfassung**

Die Erfindung betrifft eine Kupplungsvorrichtung (1), insbesondere eine Kraftfahrzeugkupplungsvorrichtung, die eine Kupplungsscheibe (2) mit einem Nabenteil (3) aufweist, die drehfest, jedoch axial verschieblich auf einem Wellenteil (4) angeordnet ist, wobei Mittel (5) vorhanden sind, mit denen das Nabenteil (3) der Kupplungsscheibe (2) relativ zu dem Wellenteil (4) in einer axialen Relativposition gehalten werden kann. Um ein verbessertes Trennen der Kupplung sicherzustellen, sieht die Erfindung vor, dass die Mittel (5) mindestens ein Rastelement (6) aufweisen, das an oder in dem Nabenteil (3) der Kupplungsscheibe (2) axial unverschieblich angeordnet ist und das mit einer Ausnehmung (7) im Wellenteil (4) zusammenwirken kann, um das Nabenteil (3) und das Wellenteil (4) relativ zueinander in einer definierten axialen Relativposition festzulegen.

## Beschreibung

Die Erfindung betrifft eine Kupplungsvorrichtung, insbesondere eine Kraftfahrzeugkupplungsvorrichtung, die eine Kupplungsscheibe mit einem Nabenteil aufweist, die drehfest, jedoch axial verschieblich auf einem Wellenteil angeordnet ist, wobei Mittel vorhanden sind, mit denen das Nabenteil der Kupplungsscheibe relativ zu dem Wellenteil in einer axialen Relativposition gehalten werden kann.

Moderne Getriebe weisen stets geringe Schleppmomente auf. Dies führt dazu, dass sehr kleine Drehmomente die Getriebeeingangswelle in Bewegung versetzen. Beim Schalten beispielsweise vom ersten Gang in den Rückwärtsgang kann dies dazu führen, dass der Rückwärtsgang nur mit Geräuschen eingelegt werden kann.

Es ist daher bekannt, die Naben der Kupplungsscheibe besonders zu schmieren bzw. mit Oberflächen zu versehen, die günstige Gleiteigenschaften haben. Eine andere, eher indirekte Maßnahme ist es, auch den Rückwärtsgang zu synchronisieren.

Nachteilig ist es dabei, dass die Kupplungsscheibe keine definierte Position einnimmt. Sie kann daher an leistungsführenden Elementen streifen und ein Drehmoment auf die Getriebeeingangswelle leiten.

Um eine diesbezügliche Verbesserung zu erreichen, sieht die DE 199 59 009 A1 eine alternative Lösungsmöglichkeit vor. Die dort offenbarte Einrichtung weist eine Kupplungsscheibenpositionieranordnung auf, um zwischen der Kupplungsscheibe und der Welle der Kupplungsvorrichtung eine definierte Axialposition vorgeben zu können, in der die beiden Teile relativ zueinander fixiert bzw. arretiert werden können. Damit soll beispielsweise bei Schiefstellungen der Kupplungsvorrichtung verhindert werden, dass die Kupplungsscheibe schwerkraftbedingt mit den Reibbelägen an der Anpressplatte oder am Schwungrad der Vorrichtung anliegt und es so zu erhöhtem Verschleiß kommt.

Die vorbekannte Lösung sieht hierzu eine Reibelementanordnung vor, die zum Erschweren einer Axialrelativbewegung zwischen der Kupplungsscheibe und der Welle wirkt. Die Reibelementanordnung hat dabei insbesondere ein an einer Baugruppe von Kupplungsscheibe und Welle axial im Wesentlichen festgehaltenes Reibelement, das an der jeweils anderen Baugruppe von Kupplungsscheibe und Welle reibschlüssig angreift.

Nachteilig ist bei der vorbekannten Lösung gemäß der DE 199 59 009 A1**,** dass zwar ein ungewolltes Anliegen der Kupplungsscheibe und namentlich deren Reibbeläge an der Anpressplatte bzw. an dem Schwungrad der Kupplung erschwert ist, dass dies jedoch nicht unbedingt ausgeschlossen werden kann. Ferner bedingt die vorgesehene Reibelementanordnung zusätzliche Reibung im Kupplungssystem. Die vorbekannte Anordnung wirkt zudem ständig, d. h. auch dann, wenn es nicht nötig ist, die axiale Relativposition zwischen Kupplungsscheibe und Welle zu halten, d. h. namentlich während der Drehung der Anordnung.

Der Erfindung liegt daher die **Aufgabe** zugrunde, eine Kupplungsvorrichtung der eingangs genannten Art so fortzubilden, dass diesbezüglich eine Verbesserung erreicht wird, d. h. es soll sichergestellt werden, dass die Kupplungsscheibe und die Welle im Ruhezustand eine axiale Relativposition einnehmen, während im Betrieb, d. h. bei Drehung der Kupplungsscheibe, die axiale Fixierung aufgehoben werden soll. Die axiale Fixierung der Kupplungsscheibe relativ zur Welle soll darüber hinaus sehr reibungsarm erfolgen, d. h. keine zusätzliche Reibung im System hervorrufen. Es soll also erreicht werden, dass die Kupplung immer zuverlässig trennt, auch wenn kleinere axiale Kräfte, insbesondere beim Schiefstand des Fahrzeugs bzw. der Kupplungsvorrichtung, auf die Kupplungsscheibe wirken.

Die **Lösung** dieser Aufgabe durch die Erfindung ist dadurch gekennzeichnet, dass die Mittel, mit denen das Nabenteil der Kupplungsscheibe relativ zu dem Wellenteil in einer axialen Relativposition gehalten werden kann, mindestens ein Rastelement aufweisen, das an oder in dem Nabenteil der Kupplungsscheibe axial unverschieblich angeordnet ist und das mit einer Ausnehmung im Wellenteil zusammenwirken kann, um das Nabenteil und das Wellenteil relativ zueinander in einer definierten axialen Relativposition zu arretieren bzw. festzulegen.

Hierdurch wird es möglich, die Kupplungsscheibe relativ zur Welle in einer definierten Axiallage zu halten, so dass beispielsweise auch dann, wenn die Kupplungsvorrichtung schief steht, es zu keinem schwerkraftbedingten axialen Verschieben der Kupplungsscheibe relativ zur Welle kommt. Damit wird zuverlässig sichergestellt, dass die Kupplung stets zuverlässig trennt.

Eine erste Weiterbildung sieht vor, dass das Rastelement federvorgespannt im Nabenteil angeordnet ist, wobei ein Federelement das Rastelement mit einer zumindest teilweise radial nach innen gerichteten Federkraft beaufschlagt.

Vorzugsweise ist die Federkraft genau radial ausgerichtet. Das Federelement ist bevorzugt eine Schraubenfeder.

Das Rastelement ist besonders bevorzugt als Kugel ausgeführt, insbesondere als Stahlkugel. Es ist aber beispielsweise auch möglich, das Rastelement als Stift, insbesondere als Stahlstift, auszuführen.

Die Ausnehmung kann als ringförmig umlaufende Nut am Außenumfang des Wellenteils ausgebildet sein. Sie kann im Radialschnitt einen V-förmigen Verlauf aufweisen; dieser ist bevorzugt symmetrisch ausgebildet. Im Falle der V-Nut kann durch die Wahl des Flankenwinkels der Ausnehmung eingestellt werden, wie groß die Haltekraft bzw. Arretierkraft der Kupplungsscheibe in der definierten Axiallage relativ zur Welle sein soll. Je steiler der Flankenwinkel ist, desto stärker wird die Kupplungsscheibe in der definierten Lage gehalten. Vorzugsweise schließen die Flanken der V-förmigen Vertiefung mit der Achse des Wellenteils einen Winkel zwischen 5° und 20° ein.

Eine alternative Ausgestaltung sieht für die Ausnehmung im Radialschnitt einen rechteckförmigen Verlauf vor. Andere Formen sind beispielsweise kreisförmige oder ovale Nutausführungen.

Das Rastelement ist vorzugsweise mit dem Federelement in einer Bohrung im Nabenteil angeordnet. Die Bohrung ist dabei mit Vorteil radial gerichtet. Weiterhin kann vorgesehen sein, dass die Bohrung radial außen mit einem Verschlusselement verschlossen ist.

Es können auch mehrere Mittel zum axialen Festlegen über den Umfang des Nabenteils beziehungsweise Wellenteils angeordnet sein. Dies erfolgt im gegebenen Falle vorzugsweise so, dass die mehreren Mittel äquidistant um den Umfang des Nabenteils beziehungsweise Wellenteils angeordnet sind.

Mit der vorgeschlagenen Lösung ist sichergestellt, dass die Kupplungsscheibe und die Welle im Ruhezustand eine definierte axiale Relativposition einnehmen. Dreht sich die Welle samt Kupplungsscheibe, wird durch die Zentrifugalkraft das Rastelement, d. h. insbesondere die Kugel, gegen die Feder radial nach außen gedrückt, so dass die Arretierung aufgehoben wird und eine freie axiale Verschieblichkeit der Kupplungsscheibe auf dem Wellenteil vorliegt. Die axiale Arretierung der Kupplungsscheibe relativ zur Welle erfolgt durch das bevorzugt vorgesehene Rastelement in Form einer Kugel sehr reibungsarm. Die Kupplung trennt daher stets zuverlässig, auch wenn beispielsweise schiefstandbedingte Schwerkräfte wirken.

In der Zeichnung ist ein Ausführungsbeispiel der Erfindung dargestellt. Es zeigen:
- Fig. 1: eine Kraftfahrzeug-Kupplungsvorrichtung im Radialschnitt,
- Fig. 2: die Einzelheit Z gemäß Fig. 1 in vergrößerter Darstellung in einer ersten Relativlage zwischen Nabenteil und Wellenteil der Kupplungsvorrichtung, nämlich in noch nicht arretierter Lage, und
- Fig. 3: die Einzelheit Z gemäß Fig. 1 in einer zweiten Relativlage zwischen Nabenteil und Wellenteil, nämlich in arretierter Lage.

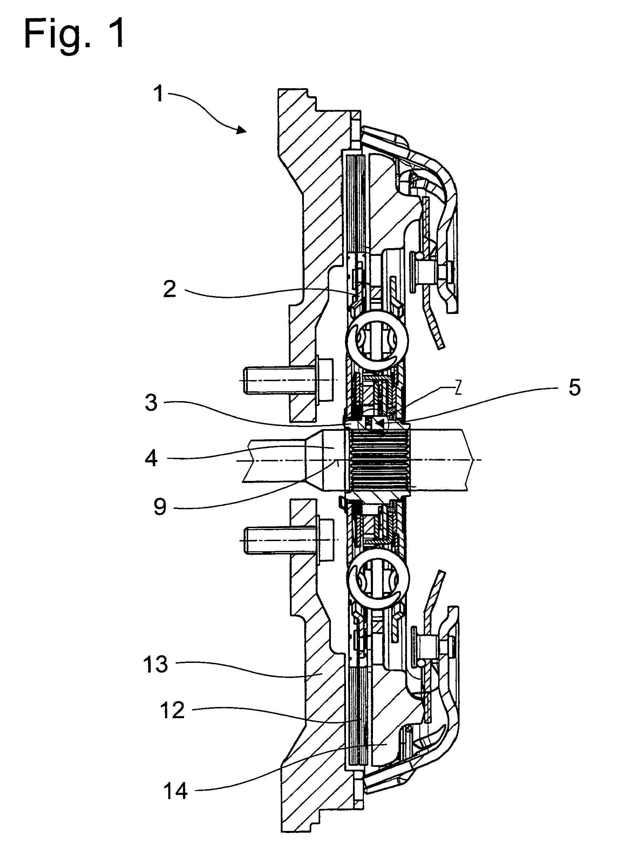

In Fig. 1 ist eine Kraftfahrzeugkupplung 1 zu sehen, die eine an sich bekannte Bauart aufweist. Eine Kupplungsscheibe 2 mit Reibbelägen 12 weist ein Nabenteil 3 auf. Das Nabenteil 3 ist axial, d. h. in Richtung der Achse 9, auf einem Wellenteil 4 (Getriebeeingangswelle) verschieblich, jedoch drehfest angeordnet. Die Kupplungsscheibe 2 und namentlich der Bereich der Reibbeläge 12 ist dabei zwischen einem Schwungrad 13 und einer Anpressplatte 14 angeordnet.

Ohne besondere Maßnahmen würde es - begünstigt durch Vibrationen des Antriebsmotors - bei einer etwas schiefen Anordnung der Kupplung 1 zu einem axialen Wandern der Kupplungsscheibe 2 samt Nabenteil 3 auf dem Wellenteil 4 kommen. Dabei würden die Reibbeläge 12 auch bei gelüfteter Kupplung entweder am Schwungrad 13 oder an der Anpressplatte 14 anliegen, was zusätzlichen Verschleiß bzw. ein unerwünschtes Schleppmoment bedeuten würde.

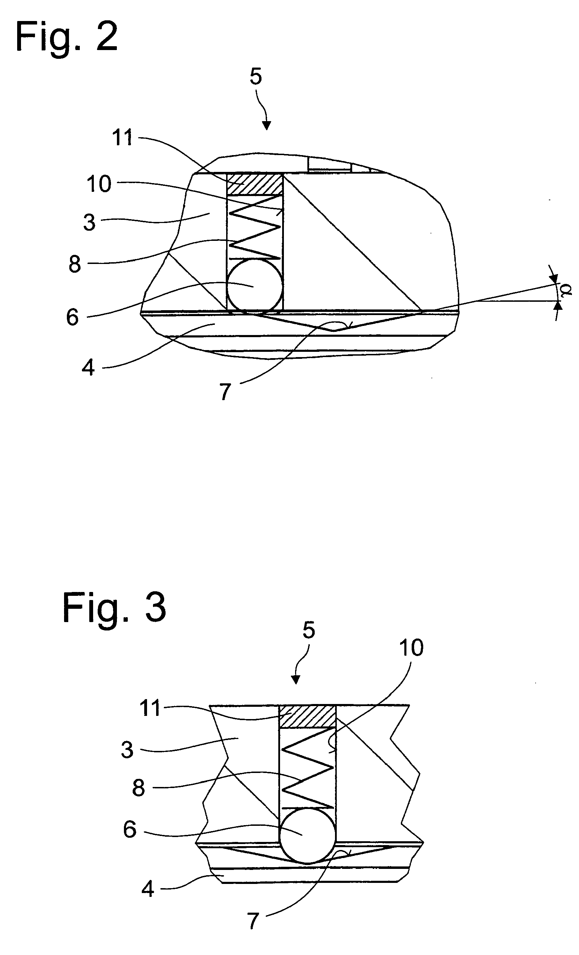

Um dies zu verhindern, sind Mittel 5 zum axialen Festlegen bzw. Arretieren der Kupplungsscheibe 2 relativ zum Wellenteil 4 vorgesehen, deren Aufbau detailliert aus den Figuren 2 und 3 hervorgeht.

Figur 2 zeigt dabei die Stellung der Bauteile vor dem Erreichen der arretierten Lage, während Figur 3 die arretierte Lage dargstellt.

In das Nabenteil 3 ist (mindestens) eine sich radial erstreckende Bohrung 10 eingearbeitet. In diese Bohrung 10 ist eine Stahlkugel 6 als Rastelement eingebracht, die entlang der Bohrungsachse beweglich ist. Der Kugeldurchmesser ist geringfügig kleiner als der Bohrungsdurchmesser, so dass Spiel vorliegt. Die Kugel 6 wird durch ein Federelement 8 in Form einer Schraubenfeder in Bohrungs-Achsrichtung vorgespannt, und zwar radial nach innen. Hierdurch wird erreicht, dass die Kugel 6 radial auf die Außenfläche des Wellenteils 4 gedrückt wird. Die Feder 8 wird durch ein Verschlusselement 11, mit dem die Bohrung 10 verschlossen wird, in Position gehalten.

In die äußere Oberfläche des Wellenteils 4 ist eine ringförmig umlaufende Ausnehmung 7 eingebracht. Dies erfolgt bevorzugt im Bereich einer nicht näher dargestellten Keilverzahnung, die die Drehmomentübertragung von der Kupplungsscheibe 2 auf das Wellenteil 4 sicherstellt. Die Ausnehmung 7 ist im Radialschnitt - wie in den Figuren 2 und 3 zu sehen - V-förmig ausgestaltet. Die V-förmige Kontur ist vorliegend symmetrisch ausgebildet. Die Flanken der Kontur liegen unter einem Flankenwinkel α (s. Fig. 2) zur Achse 9 des Wellenteils (s. Fig. 1). Der Winkel α wird so gewählt, dass der Arretiereffekt des Nabenteils 3 und damit der Kupplungsscheibe 2 relativ zum Wellenteil 4 hinreichend groß ist, jedoch auch nicht übermäßig groß, so dass sich Nabenteil 3 und Wellenteil 4 bei Bedarf auch wieder leicht axial lösen lassen. Typische Werte für den Flankenwinkel α liegen zwischen 7° und 17°.

D. h. die geometrische Ausgestaltung der Ausnehmung 7 sowie des Rastelements 6 und der Feder 8 bestimmen den Arretiereffekt zwischen Wellenteil 4 und Kupplungsscheibe 2 und damit das Trennverhalten der Kupplung 1.

Wie zu sehen ist, erhält also die Kupplungsscheibe 2 bzw. das Nabenteil 3 ein Element zur axialen Lagefixierung relativ zum Wellenteil 4. Die Lagefixierung ist im Leerlauf aktiv, d. h. wenn sich die Kupplungsscheibe 2 und das Wellenteil 4 nicht drehen. D. h. dann wird die Kugel 6 durch die Feder 8 in die Ausnehmung 7 gedrückt und damit die axiale Arretierung bewerkstelligt.

Dreht die Anordnung, d. h. die Kupplungsscheibe 2 samt Wellenteil 4, hebt die Kugel 6 fliehkraftbedingt radial nach außen ab und verlässt die Ausnehmung 7. Damit ist die axiale Arretierung bzw. Fixierung freigegeben bzw. aufgehoben. Ein freies axiales Verschieben der Kupplungsscheibe 2 relativ zum Wellenteil 4 ist möglich.

Die im Ausführungsbeispiel dargestellte Feder-Kugel-Kombination kann durch beliebige andere Rast- bzw. Federelemente ersetzt werden. Beispielsweise kann ein federnd angeordneter Drahtstift vorgesehen werden. Dieser kann tangential durch das Nabenteil 3 gesteckt sein und die Nabenverzahnung durchdringen.

### Bezugszeichenliste

- 1: Kupplungsvorrichtung
- 2: Kupplungsscheibe
- 3: Nabenteil
- 4: Wellenteil
- 5: Mittel zum axialen Festlegen
- 6: Rastelement
- 7: Ausnehmung
- 8: Federelement
- 9: Achse des Wellenteils
- 10: Bohrung
- 11: Verschlusselement
- 12: Reibbelag
- 13: Schwungrad
- 14: Anpressplatte

- α: Flankenwinkel

## Patentansprüche

1. Kupplungsvorrichtung (1), insbesondere Kraftfahrzeugkupplungsvorrichtung, die eine Kupplungsscheibe (2) mit einem Nabenteil (3) aufweist, die drehfest, jedoch axial verschieblich auf einem Wellenteil (4) angeordnet ist, wobei Mittel (5) vorhanden sind, mit denen das Nabenteil (3) der Kupplungsscheibe (2) relativ zu dem Wellenteil (4) in einer axialen Relativposition gehalten werden kann,
**dadurch gekennzeichnet,**
**dass** die Mittel (5) mindestens ein Rastelement (6) aufweisen, das an oder in dem Nabenteil (3) der Kupplungsscheibe (2) axial unverschieblich angeordnet ist und das mit einer Ausnehmung (7) im Wellenteil (4) zusammenwirken kann, um das Nabenteil (3) und das Wellenteil (4) relativ zueinander in einer definierten axialen Relativposition zu arretieren.

2. Kupplungsvorrichtung nach Anspruch 1, **dadurch gekennzeichnet, dass** das Rastelement (6) federvorgespannt im Nabenteil (3) angeordnet ist, wobei ein Federelement (8) das Rastelement (6) mit einer zumindest teilweise radial nach innen gerichteten Federkraft beaufschlagt.

3. Kupplungsvorrichtung nach Anspruch 2, **dadurch gekennzeichnet, dass** das Federelement (8) eine Schraubenfeder ist.

4. Kupplungsvorrichtung nach einem der Ansprüche 1 bis 3, **dadurch gekennzeichnet, dass** das Rastelement (6) eine Kugel, insbesondere eine Stahlkugel, ist.

5. Kupplungsvorrichtung nach einem der Ansprüche 1 bis 3, **dadurch gekennzeichnet, dass** das Rastelement (6) ein Stift, insbesondere ein Stahlstift, ist.

6. Kupplungsvorrichtung nach einem der Ansprüche 1 bis 5, **dadurch gekennzeichnet, dass** die Ausnehmung (7) als ringförmig umlaufende Nut am Außenumfang des Wellenteils (4) ausgebildet ist.

7. Kupplungsvorrichtung nach einem der Ansprüche 1 bis 6, **dadurch gekennzeichnet, dass** die Ausnehmung (7) im Radialschnitt einen V-förmigen Verlauf aufweist.

8. Kupplungsvorrichtung nach Anspruch 7, **dadurch gekennzeichnet, dass** der V-förmige Verlauf symmetrisch ausgebildet ist.

9. Kupplungsvorrichtung nach Anspruch 7 oder 8, **dadurch gekennzeichnet, dass** der Flankenwinkel (α) der Ausnehmung (7) mit der Achse (9) des Wellenteils (4) zwischen 5° und 20° beträgt.

10. Kupplungsvorrichtung nach einem der Ansprüche 1 bis 6, **dadurch gekennzeichnet, dass** die Ausnehmung (7) im Radialschnitt einen rechteckförmigen, einen bogenförmigen und/oder einen runden Verlauf aufweist.

11. Kupplungsvorrichtung nach einem der Ansprüche 1 bis 10, **dadurch gekennzeichnet, dass** das Rastelement (6) mit dem Federelement (8) in einer Bohrung (10) im Nabenteil (3) angeordnet ist.

12. Kupplungsvorrichtung nach Anspruch 11, **dadurch gekennzeichnet, dass** die Bohrung (10) radial gerichtet ist.

13. Kupplungsvorrichtung nach Anspruch 11 oder 12, **dadurch gekennzeichnet, dass** die Bohrung (10) radial außen mit einem Verschlusselement (11) verschlossen ist.

14. Kupplungsvorrichtung nach einem der Ansprüche 1 bis 13, **dadurch gekennzeichnet, dass** mehrere Mittel (5) über den Umfang des Nabenteils (3) beziehungsweise des Wellenteils (4) angeordnet sind.

15. Kupplungsvorrichtung nach Anspruch 14, **dadurch gekennzeichnet, dass** die mehreren Mittel (5) äquidistant um den Umfang des Nabenteils (3) beziehungsweise des Wellenteils (4) herum angeordnet sind.
